# EUROPÄISCHE PATENTSCHRIFT

(11) **EP 2 601 067 B1**
(45) Veröffentlichungstag und Bekanntmachung des Hinweises auf die Patenterteilung: **28.11.2018**
(21) Anmeldenummer: 11725685.9
(22) Anmeldetag: 07.06.2011
(51) Int. Cl.: B60L 3/00

(54) **VERFAHREN ZUR BEGRENZUNG EINES EINSCHALTSTROMES IN EINEM ELEKTRISCHEN NETZ**
METHOD FOR LIMITING A SWITCH-ON CURRENT IN AN ELECTRICAL SYSTEM
PROCÉDÉ POUR LIMITER UN COURANT DE FERMETURE DE CIRCUIT DANS UN RÉSEAU ÉLECTRIQUE

(30) Priorität: 04.08.2010 DE 102010038892
(43) Veröffentlichungstag der Anmeldung: 12.06.2013
(73) Patentinhaber: Robert Bosch GmbH, 70469 Stuttgart (DE); SAMSUNG SDI CO., LTD., Yongin-si, Gyeonggi-do 446-577 (KR)
(72) Erfinder: STECK, Armin, 72127 Kusterdingen (DE); PISCOL, Ralf, 71083 Herrenberg (DE)
(74) Vertreter: Bee, Joachim
(86) Internationale Anmeldenummer: PCT/EP2011/059381
(87) Internationale Veröffentlichungsnummer: WO 2012/016738

(56) Entgegenhaltungen:
- WO-A1-2009/088156
- JP-A- 2008 211 900
- JP-A- 2009 038 925
- JP-A- 2009 229 405
- US-A1- 2008 092 258

## Beschreibung

Die vorliegende Erfindung betrifft ein Verfahren zur Begrenzung eines Einschaltstromes in einem elektrischen Netz, insbesondere einem Hochspannungsnetz, sowie eine Vorrichtung und eine Batterie, welche dazu ausgelegt sind, das erfindungsgemäße Verfahren auszuführen.

### Stand der Technik

Aus dem Stand der Technik sind Verfahren zur Begrenzung eines Einschaltstromes in einem elektrischen Netz, insbesondere einem Hochspannungsnetz, bekannt, bei welchen während eines Einschaltvorgangs eine Vorladung über einen Vorladewiderstand vorgenommen wird, so dass ein Einschaltstrom, welcher durch eine Batterie und einen zugeschalteten Verbraucher fließt, vermindert wird. Hat sich in einem solchen System die Systemspannung an die Batteriespannung angepasst, wird der Vorladewiderstand kurzgeschlossen und somit deaktiviert. Findet jedoch eine solche Vorladung innerhalb kürzester Zeit mehrfach statt, kann es zu einer Überhitzung des Vorladewiderstandes kommen.

Eine solche Überhitzung des Vorladewiderstandes sollte vor allem in Batteriesystemen verhindert werden, an die sehr hohe Anforderungen bezüglich Zuverlässigkeit gestellt werden, beispielsweise in solchen, die in Hybrid- und Elektrofahrzeugen zum Einsatz kommen. Hintergrund für die hohen Anforderungen ist, dass ein Ausfall der Batterie in solchen Systemen zu einem Ausfall des Gesamtsystems führen kann. Beispielsweise führt bei einem elektrischen Fahrzeug ein Ausfall der Traktionsbatterie zu einem so genannten "Liegenbleiber". Ebenso kann ein Ausfall der Batterie zu einem sicherheitsrelevanten Problem führen, zum Beispiel wenn die Batterie nicht mehr vom Fahrzeugbordnetz getrennt werden kann. Dokument JP 2009229405 offenbart ein Verfahren gemäss den Oberbegriff des Anspruchs 1.

### Offenbarung der Erfindung

Die Erfindung betrifft ein Verfahren gemäss Anspruch 1, eine Vorrichtung gemäss Anspruch 5 und eine Batterie gemäss Anspruch 9. Das erfindungsgemäße Verfahren zur Begrenzung eines Einschaltstromes in einem elektrischen Netz, insbesondere einem Hochspannungsnetz, welches durch eine Batterie versorgt wird, umfasst grundsätzlich folgende Schritte: während eines Einschaltvorgangs wird ein elektrischer Verbraucher am elektrischen Netz angeschlossen und über einen Vorladewiderstand vorgeladen. Eine Überwachungseinheit erfasst regelmäßig Betriebsdaten von mindestens einer eine Temperatur des Vorladewiderstandes beeinflussenden Größe und schätzt auf deren Grundlage die Temperatur des Vorladewiderstandes ab. Durch Einleitung geeigneter Maßnahmen kann so eine Überhitzung des Vorladewiderstandes verhindert werden, was einen Sicherheits- und Zuverlässigkeitsgewinn darstellt. Auf die Verwendung eines Temperatursensors zur Messung der Temperatur des Vorladewiderstands kann verzichtet werden. Die Überwachung kann hierbei grundsätzlich sowohl im Batteriesystem als auch außerhalb des Batteriesystems erfolgen.

Die Überwachungseinheit kann insbesondere folgende Größen einzeln oder in Kombination erfassen: einen durch den Vorladewiderstand fließenden Strom; eine an der Batterie anliegende Spannung; eine Anzahl von Einschaltvorgängen pro Zeiteinheit; eine Dauer eines Einschaltvorgangs und/oder eine Umgebungstemperatur. Die Überwachung der Temperatur des Vorladewiderstandes ist somit in Form eines Beobachtersystems eingerichtet, welches kontinuierlich einzelne, mehrere oder alle der genannten Größen erfasst.

Die Schätzung der Temperatur des Vorladewiderstandes kann auf Grundlage eines Temperaturmodells erfolgen, welches eine Eigenerwärmung des Vorladewiderstandes in Abhängigkeit der erfassten Betriebsdaten vorhersagt. Bei jedem Einschaltvorgang des Batteriesystems, das heißt bei jeder Zuschaltung eines elektrischen Verbrauchers, wird durch den hohen Einschaltstrom der Vorladewiderstand des Batteriesystems erwärmt. Werden nun innerhalb kurzer Zeit mehrere Einschaltvorgänge durchgeführt, kann das Temperaturmodell die Eigenerwärmung des Vorladewiderstandes berechnen.

Bei einer drohenden Überhitzung des Vorladewiderstandes können geeignete Gegenmaßnahmen eingeleitet werden:
Wenn die geschätzte Temperatur des Vorladewiderstandes einen vorbestimmten ersten Temperaturschwellenwert übersteigt, kann ein Warnsignal erzeugt werden.

Wenn die geschätzte Temperatur des Vorladewiderstandes einen vorbestimmten zweiten Temperaturschwellenwert übersteigt, welcher höher als der erste Temperaturschwellenwert ist, kann eine (erneute) Vorladung des elektrischen Verbrauchers über den Vorladewiderstand verhindert werden. Eine erneute Vorladung kann wieder zugelassen werden, wenn die geschätzte Temperatur des Vorladewiderstandes unter einen vorbestimmten dritten Temperaturschwellenwert fällt.

Ein weiterer Aspekt der Erfindung betrifft eine Vorrichtung zur Begrenzung eines Einschaltstroms in einem elektrischen Netz, insbesondere einem Hochspannungsnetz, welche dazu ausgelegt ist, das erfindungsgemäße Verfahren auszuführen. Die Vorrichtung umfasst eine Batterie und einen Vorladewiderstand, über welchen ein elektrischer Verbraucher vorgeladen werden kann. Außerdem umfasst die Vorrichtung eine Überwachungseinheit zur regelmäßigen Erfassung von Betriebsdaten, welche eine Abschätzung der Temperatur des Vorladewiderstandes erlauben.

Die Überwachungseinheit kann Teil der Batterie sein, aber auch außerhalb der Batterie angeordnet sein. Im letzteren Fall kann die Überwachungseinheit Teil eines Steuergeräts sein, welches typischerweise gemeinsam mit der Batterie an einen Feldbus, insbesondere an einen CAN (Controller Area Network)-Feldbus, angeschlossen ist.

Für den Fall, dass die Überwachungseinheit Teil der Batterie ist, kann die erfindungsgemäße Vorrichtung in ihrer Gesamtheit in einer Batterie integriert sein. Die Batterie ist bevorzugt eine Lithium-Ionen Batterie.

In beiden Anordnungen kann ein erstes Relais mit dem Vorwiderstand in Reihe und/oder ein zweites Relais parallel zu dem Vorladewiderstand geschaltet sein. Dadurch, dass die erfindungsgemäße Vorrichtung beziehungsweise Batterie dazu ausgelegt ist, die Temperatur des Vorladewiderstandes zu schätzen und bei Überhitzung des Vorladewiderstandes geeignete Gegenmaßnahmen einzuleiten, kann auch eine Schädigung des ersten Relais verhindert werden.

Die erfindungsgemäße Vorrichtung beziehungsweise Batterie können Teil eines Kraftfahrzeugs, insbesondere eines elektrischen Kraftfahrzeugs, sein.

### Zeichnungen

Ausführungsbeispiele der Erfindung werden anhand der Zeichnungen und der nachfolgenden Beschreibung näher erläutert. Es zeigen:
Figur 1 ein Ausführungsbeispiel einer erfindungsgemäßen Batterie und
Figur 2 ein Ausführungsbeispiel eines erfindungsgemäßen Verfahrens zur Begrenzung eines Einschaltstromes in einem elektrischen Netz.

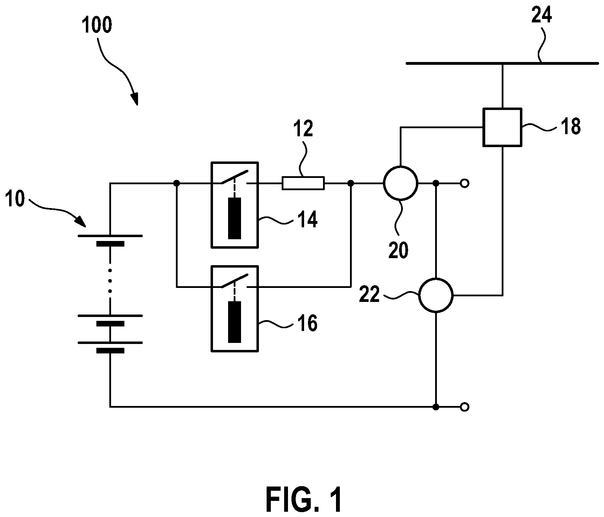

Figur 1 zeigt ein Ausführungsbeispiel einer erfindungsgemäßen, insgesamt mit 100 bezeichneten Batterie. Die Batterie 100 umfasst eine Vielzahl von in Reihe geschalteten Batteriezellen 10 und einen Vorladewiderstand 12. Wenn der Vorladewiderstand 12 in der Batterie 100 nicht vorgesehen wäre, würde bei Zuschaltung eines nicht dargestellten elektrischen Verbrauchers ein hoher Einschaltstrom durch die Batterie fließen, welcher darauf zurückzuführen ist, dass sich der eine kapazitive Komponente aufweisende elektrische Verbraucher auflädt. Um den Einschaltstrom zu begrenzen, wird der Vorladewiderstand 12 durch Schließung eines ersten Relais 14 vor den elektrischen Verbraucher geschaltet. Wenn der Einschaltstrom abgefallen ist beziehungsweise die Spannung am elektrischen Verbraucher sich an die Batteriespannung angepasst hat, wird das erste Relais 14 geöffnet und ein zweites Relais 16 geschlossen, wodurch der Vorladewiderstand 12 kurzgeschlossen wird.

Die Vorladung über den Vorladewiderstand 12 verhindert eine Schädigung des zweiten Relais 16, hat aber eine Erwärmung des Vorladewiderstandes 12 zur Folge. Um wiederum eine Schädigung des Vorladewiderstandes 12 zu verhindern, ohne die Temperatur des Vorladewiderstandes 12 direkt messen zu müssen, ist eine Überwachungseinheit 18 in der Batterie 100 vorgesehen, welche regelmäßig Messdaten einer Strommesseinheit 20 und einer Spannungsmesseinheit 22 erfasst. Die Überwachungseinheit 18 hat die Funktion eines Beobachtersystems, welches auf Grund der erfassten Messdaten anhand eines Temperaturmodells eine Temperatur des Vorladewiderstandes 12 berechnet.

Wenn die so berechnete Temperatur einen vorbestimmten Schwellenwert überschreitet, wird dies über eine Datenverbindung 24, wie zum Beispiel einen CAN-Bus, welcher nicht Teil der Batterie 100 ist, anderen, nicht dargestellten Steuergeräten mitgeteilt. Daraufhin können geeignete Gegenmaßnahmen ergriffen werden, wie beispielsweise die Generierung eines Warnsignals oder die Sperrung einer Hinzuschaltung weiterer elektrischer Komponenten.

In Figur 1 ist die Überwachungseinheit 18 als Teil der Batterie 100, insbesondere einer Batteriemanagementeinheit, vorgesehen. Die Überwachungseinheit 18 kann jedoch auch außerhalb der Batterie 100 angeordnet sein und bevorzugt von einem Steuergerät, zum Beispiel einem Hauptsteuergerät eines Kraftfahrzeugs, umfasst sein.

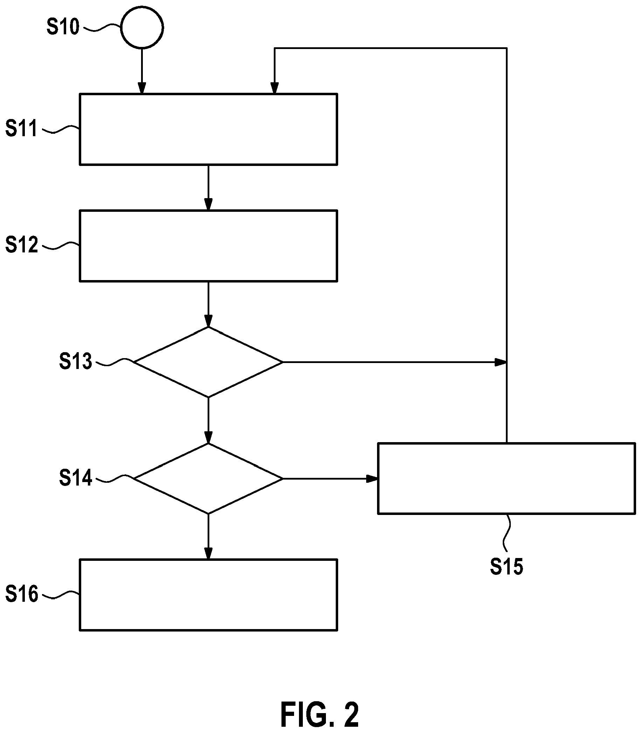

Figur 2 zeigt ein Ausführungsbeispiel eines erfindungsgemäßen Verfahrens zur Begrenzung eines Einschaltstromes in einem elektrischen Netz, welches in der in Figur 1 dargestellten Batterie ausgeführt wird. Das Verfahren startet in Schritt S10. In S11 werden durch die Überwachungseinheit 18 regelmäßig Betriebsdaten wie beispielsweise ein durch den Vorladewiderstand 12 fließender Strom oder eine Anzahl von Einschaltvorgängen pro Zeiteinheit erfasst. In Schritt S12 wird auf Grundlage der Betriebsdaten eine Temperatur des Vorladewiderstandes 12 geschätzt. In Schritt S13 wird die geschätzte Temperatur des Vorladewiderstandes mit einem vorbestimmten ersten Temperaturschwellenwert verglichen.

Wenn die geschätzte Temperatur des Vorladewiderstandes 12 nicht größer als der vorbestimmte erste Temperaturschwellenwert ist, wird zum Beginn des Verfahrens in Schritt S11 zurückverzweigt, anderenfalls wird im Schritt S14 die geschätzte Temperatur des Vorladewiderstandes 12 mit einem vorbestimmten zweiten Temperaturschwellenwert verglichen. Wenn die geschätzte Temperatur des Vorladewiderstandes 12 nicht größer als der vorbestimmte zweite Temperaturschwellenwert ist, wird in Schritt S15 lediglich ein Warnsignal erzeugt und zum Beginn des Verfahrens in Schritt S11 zurückverzweigt. Das Warnsignal kann beispielsweise einem Kraftfahrzeugführer anzeigen, dass das Fahrzeug oder bestimmte elektrische Komponenten nicht mehr gestartet werden können, wenn weitere Vorladungen stattfinden. Wenn die geschätzte Temperatur des Vorladewiderstandes dagegen größer als der vorbestimmte zweite Temperaturschwellenwert ist, wird in Schritt S16 eine mögliche weitere Vorladung gesperrt.

## Patentansprüche

1. Verfahren zur Begrenzung eines Einschaltstromes in einem elektrischen Netz, insbesondere einem Hochspannungsnetz, welches durch eine Batterie (100) versorgt wird, wobei während eines Einschaltvorgangs ein elektrischer Verbraucher am elektrischen Netz angeschlossen und über einen Vorladewiderstand (12) vorgeladen wird, wobei eine Überwachungseinheit (18) regelmäßig Betriebsdaten von mindestens einer eine Temperatur des Vorladewiderstandes (12) beeinflussenden Größe erfasst (S11) und auf deren Grundlage die Temperatur des Vorladewiderstandes (12) schätzt (S12), **dadurch gekennzeichnet, dass** ein Warnsignal erzeugt wird (S15), wenn die geschätzte Temperatur des Vorladewiderstandes einen ersten Temperaturschwellenwert übersteigt (S13).

2. Verfahren nach Anspruch 1, wobei die Überwachungseinheit (18) einen durch den Vorladewiderstand (12) fließenden Strom und/oder eine an der Batterie (100) anliegende Spannung und/oder eine Anzahl von Einschaltvorgängen pro Zeiteinheit und/oder eine Dauer eines Einschaltvorgangs und/oder eine Umgebungstemperatur erfasst.

3. Verfahren nach Anspruch 1 oder 2, wobei die Schätzung der Temperatur des Vorladewiderstandes (18) auf Grundlage eines Temperaturmodells erfolgt, welches eine Eigenerwärmung des Vorladewiderstandes (12) in Abhängigkeit der erfassten Betriebsdaten vorhersagt.

4. Verfahren nach einem der vorangehenden Ansprüche, wobei eine Vorladung des elektrischen Verbrauchers über den Vorladewiderstand verhindert wird (S16), wenn die geschätzte Temperatur des Vorladewiderstandes einen zweiten Temperaturschwellenwert übersteigt (S14).

5. Vorrichtung zur Begrenzung eines Einschaltstromes in einem elektrischen Netz, insbesondere einem Hochspannungsnetz, mit einer Batterie (100) und einem Vorladewiderstand (12), wobei die Vorrichtung dazu ausgelegt ist, einen elektrischen Verbraucher über den Vorladewiderstand (12) vorzuladen, **dadurch gekennzeichnet, dass** die Vorrichtung eine Überwachungseinheit (18) umfasst und dazu ausgelegt ist, ein Verfahren nach einem der vorangehenden Ansprüche auszuführen.

6. Vorrichtung nach Anspruch 5, wobei die Vorrichtung ein Steuergerät umfasst und die Überwachungseinheit (18) Teil des Steuergeräts ist.

7. Vorrichtung nach Anspruch 6, wobei das Steuergerät und die Batterie an einem Feldbus (24), insbesondere einem CAN-Feldbus, angeschlossen sind.

8. Vorrichtung nach einem der Ansprüche 5 bis 7, wobei ein erstes Relais (14) mit dem Vorladewiderstand (12) in Reihe und/oder ein zweites Relais (16) parallel zu dem Vorladewiderstand (12) geschaltet ist.

9. Batterie (100) mit einem Vorladewiderstand (12), wobei die Batterie (100) dazu ausgelegt ist, einen elektrischen Verbraucher über den Vorladewiderstand (12) vorzuladen, und die Batterie (100) eine Überwachungseinheit (18) umfasst, welche dazu ausgelegt ist, regelmäßig Betriebsdaten von mindestens einer eine Temperatur des Vorladewiderstandes (12) beeinflussenden Größe zu erfassen und auf deren Grundlage die Temperatur des Vorladewiderstandes (12) zu schätzen, **dadurch gekennzeichnet, dass** die Batterie (100) dazu ausgelegt ist, ein Verfahren nach einem der Ansprüche 1 bis 4 auszuführen.

10. Kraftfahrzeug, insbesondere elektrisches Kraftfahrzeug, umfassend eine Vorrichtung nach einem der Ansprüche 6 bis 9 oder eine Batterie (100) nach Anspruch 9.

## Claims

1. Method for limiting a switch-on current in an electrical system, in particular a high-voltage network which is supplied by a battery (100), wherein, during a switch-on operation, an electrical load is connected to the electrical network and pre-charged via a pre-charging resistor (12), wherein a monitoring unit (18) regularly records (S11) operating data of at least one variable which influences the temperature of the pre-charging resistor (12) and, based thereon, estimates (S12) the temperature of the pre-charging resistor (12), **characterized in that** a warning signal is generated (S15) when the estimated temperature of the pre-charging resistor exceeds (S13) a first temperature threshold value.

2. Method according to Claim 1, wherein the monitoring unit (18) records a current flowing through the pre-charging resistor (12) and/or a voltage applied to the battery (100) and/or a number of switch-on operations per unit time and/or a duration of a switch-on operation and/or an ambient temperature.

3. Method according to Claim 1 or 2, wherein the temperature of the pre-charging resistor (18) is estimated based on a temperature model which predicts an inherent heating of the pre-charging resistor (12) as a function of the recorded operating data.

4. Method according to one of the preceding claims, wherein pre-charging of the electrical load via the pre-charging resistor is prevented (S16) when the estimated temperature of the pre-charging resistor exceeds (S14) a second temperature threshold value.

5. Device for limiting a switch-on current in an electrical system, in particular a high-voltage network, having a battery (100) and a pre-charging resistor (12), wherein the device is designed to pre-charge an electrical load via the pre-charging resistor (12), **characterized in that** the device includes a monitoring unit (18) and is designed to carry out a method according to one of the preceding claims.

6. Device according to Claim 5, wherein the device includes a control device and the monitoring unit (18) is part of the control device.

7. Device according to Claim 6, wherein the control device and the battery are connected to a field bus (24), in particular to a CAN field bus.

8. Device according to one of Claims 5 to 7, wherein a first relay (14) is connected in series with the pre-charging resistor (12) and/or a second relay (16) in parallel with the pre-charging resistor (12).

9. Battery (100) having a pre-charging resistor (12), wherein the battery (100) is designed to pre-charge an electrical load via the pre-charging resistor (12), and the battery (100) includes a monitoring unit (18) which is designed to regularly record operating data of at least one variable which influences the temperature of the pre-charging resistor (12) and, based thereon, to estimate the temperature of the pre-charging resistor (12), **characterized in that** the battery (100) is designed to carry out a method according to one of Claims 1 to 4.

10. Motor vehicle, in particular electric motor vehicle, incorporating a device according to one of Claims 6 to 9 or a battery (100) according to Claim 9.

## Revendications

1. Procédé pour limiter un courant de fermeture dans un réseau électrique, en particulier un réseau à haute tension, qui est alimenté par une batterie (100), dans lequel un consommateur électrique est raccordé au réseau électrique pendant un processus de fermeture et préchargé par l'intermédiaire d'une résistance de précharge (12), dans lequel une unité de surveillance (18) acquiert régulièrement (S11) des données de fonctionnement d'au moins une grandeur ayant une influence sur une température de la résistance de précharge (12) et estime (S12) sur la base de celles-ci la température de la résistance de précharge (12), **caractérisé en ce que**, lorsque la température estimée de la résistance de précharge dépasse un premier seuil de température (S13), un signal d'avertissement est généré (S15).

2. Procédé selon la revendication 1, dans lequel l'unité de surveillance (18) acquiert un courant passant à travers la résistance de précharge (12) et/ou une tension appliquée à la batterie (100) et/ou un nombre de processus de fermeture par unité de temps et/ou une durée d'un processus de fermeture et/ou une température ambiante.

3. Procédé selon la revendication 1 ou 2, dans lequel l'estimation de la température de la résistance de précharge (18) est effectuée sur la base d'un modèle de température qui prévoit un auto-échauffement de la résistance de précharge (12) en fonction des données de fonctionnement acquises.

4. Procédé selon l'une des revendications précédentes, dans lequel la précharge du consommateur électrique par l'intermédiaire de la résistance de précharge est empêchée (S16) lorsque la température estimée de la résistance de précharge dépasse un second seuil de température (S14).

5. Dispositif de limitation d'un courant de fermeture dans un réseau électrique, en particulier un réseau à haute tension, comportant une batterie (100) et une résistance de précharge (12), dans lequel le dispositif est conçu pour précharger une charge électrique par l'intermédiaire de la résistance de précharge (12), **caractérisé en ce que** le dispositif comprend une unité de surveillance (18) et est conçu pour mettre en oeuvre un procédé selon l'une des revendications précédentes.

6. Dispositif selon la revendication 5, dans lequel le dispositif comprend un appareil de commande et l'unité de surveillance (18) fait partie de l'appareil de commande.

7. Dispositif selon la revendication 6, dans lequel l'unité de commande et la batterie sont raccordées à un bus de terrain (24), en particulier à un bus de terrain CAN.

8. Dispositif selon l'une des revendications 5 à 7, dans lequel un premier relais (14) est connecté en série à la résistance de précharge (12) et/ou un second relais (16) est connecté en parallèle à la résistance de précharge (12).

9. Batterie (100) comportant une résistance de précharge (12), dans laquelle la batterie (100) est conçue pour précharger un consommateur électrique par l'intermédiaire de la résistance de précharge (12), et la batterie (100) comprend une unité de surveillance (18) conçue pour acquérir régulièrement des données de fonctionnement d'au moins une grandeur ayant une influence sur une température de la résistance de précharge (12) et pour estimer sur la base de celles-ci la température de la résistance de précharge (12), **caractérisée en ce que** la batterie (100) est conçue pour mettre en oeuvre un procédé selon l'une des revendications 1 à 4.

10. Véhicule à moteur, en particulier véhicule à moteur électrique, comprenant un dispositif selon l'une des revendications 6 à 9 ou une batterie (100) selon la revendication 9.
